# EUROPEAN PATENT APPLICATION

(11) **EP 4 691 333 A1**
(43) Date of publication of application: **11.02.2026**
(21) Application number: 24777410.2
(22) Date of filing: 08.01.2024
(51) Int. Cl.: A47L 11/40

(54) **MAINTENANCE STATION FOR CLEANING DEVICE, AND CLEANING SYSTEM**

(30) Priority: 24.03.2023 CN 202310327575; 11.08.2023 CN 202311018508; 11.08.2023 CN 202311018518; 11.08.2023 CN 202311019457
(71) Applicant: Shenzhen Roborock Innovation Technology Co., Ltd., Shenzhen, Guangdong 518000 (CN)
(72) Inventor: ZHOU, Yongfei, Shenzhen, Guangdong 518000 (CN); LUO, Guangzhong, Shenzhen, Guangdong 518000 (CN); YANG, Cheng, Shenzhen, Guangdong 518000 (CN); QIN, Baohuan, Shenzhen, Guangdong 518000 (CN)
(74) Representative: Lorenz Seidler Gossel Part. mbB
(86) International application number: PCT/CN2024/071104
(87) International publication number: WO 2024/198614

(57) **Abstract**

A maintenance station (100) for a cleaning device, and a cleaning system. The maintenance station (100) comprises: an isolation cavity (10) provided with a dirty water discharge port (13), wherein the isolation cavity (10) is configured to be connected to a dirty water tank of a cleaning device when the cleaning device returns to the maintenance station (100) and is operably in fluid communication with the dirty water tank; and an isolation valve (30) provided at the dirty water discharge port (13) and configured to switch between an open state and a closed state, wherein when the isolation valve (30) is in the open state, dirty water in the isolation cavity (10) can be discharged through the dirty water discharge port (13), and when the isolation valve (30) is in a closed state, the dirty water discharge port (13) is blocked.

## Description

The present application claims priority to the Chinese patent applications No. 202310327575.3 filed on March 24, 2023 and No. 202311018508.X, 202311018518.3 and 202311019457.2 filed on August 11, 2023, which are incorporated herein by reference in their entities.

### TECHNICAL FIELD

The present disclosure relates to the field of automatic cleaning technologies, and in particular to a maintenance station of a cleaning device and a cleaning system.

### BACKGROUND

With the continuous development of science and technology, cleaning devices, such as floor scrubbers and sweeping and mopping all-in-one machines, have been widely adopted by families. The floor scrubbers are more time-saving and labor-saving than traditional manual sweeping. The floor scrubber usually includes a floor scrubber body and a cleaning seat body. The floor scrubber body is usually provided with a wastewater tank, a clean water tank and a main suction fan. The cleaning seat body includes a cleaning roller for mopping, and a cleaning liquid, such as water, from the clean water tank is sprayed onto the cleaning roller through a built-in water pipe. The cleaning roller rotates at a high speed to mop the floor, and wastewater is recovered into in the wastewater tank.

Volumes of the wastewater tank and the clean water tank in the floor scrubber are limited. In order to avoid frequent manual cleaning of the wastewater tank and/or the injection of clean water into the clean water tank, a maintenance station matching the floor scrubber is designed. After the cleaning device returns to the maintenance station, the wastewater in the wastewater tank may be recovered to the maintenance station, and the clean water may also be replenished into the clean water tank through the maintenance station.

### SUMMARY

Some embodiments of the present disclosure provide a maintenance station of a cleaning device. The maintenance station includes:
an isolation cavity having a wastewater outlet, wherein the isolation cavity is configured to be connected with a wastewater tank of the cleaning device and is operably in fluid communication with the wastewater tank when the cleaning device returns to the maintenance station; and
an isolation valve arranged at the wastewater outlet and configured to be switched between an open state and a closed state, wherein when the isolation valve is in the open state, wastewater in the isolation cavity can be discharged through the wastewater outlet; and when the isolation valve is in the closed state, the wastewater outlet is blocked.

Some embodiments of the present disclosure further provide a maintenance station of a cleaning device. The maintenance station includes:
a power source configured to provide wastewater discharge power; and
an isolation cavity configured to be operably in fluid communication with a wastewater tank of the cleaning device when the cleaning device returns to the maintenance station, wherein the isolation cavity includes:
   a wastewater outlet configured to discharge wastewater in the isolation cavity;
   an outlet of a wastewater inlet channel operably in fluid communication with the wastewater tank of the cleaning device and configured to allow the wastewater in the wastewater tank of the cleaning device to flow into the isolation cavity; and
   an inlet of an air outlet channel communicated with the power source and configured to form a negative pressure in the isolation cavity under a suction effect of the power source.

Some embodiments of the present disclosure further provide a maintenance station of a cleaning device. The maintenance station includes:
a recovery tank configured to store wastewater;
an isolation cavity arranged in the recovery tank and configured to be operably in fluid communication with a wastewater tank of the cleaning device when the cleaning device returns to the maintenance station; and
a float arranged at the bottom of the isolation cavity and configured to detect whether the isolation cavity and/or the recovery tank are/is in place and/or whether the recovery tank is full of water.

Some embodiments of the present disclosure provide a cleaning system including the maintenance station according to the preceding embodiments.

### BRIEF DESCRIPTION OF THE DRAWINGS

The accompanying drawings herein, which are incorporated into the Description and constitute a part of the Description, illustrate embodiments that conform to the present disclosure and are used together with the Description to explain principles of the present disclosure. Apparently, the accompanying drawings in the following description show merely some embodiments of the present disclosure, and those of ordinary skill in the art may still derive other accompanying drawings from these accompanying drawings without creative efforts. In the drawings:
Fig. 1 is a schematic diagram of a usage scenario of a maintenance station of a cleaning device according to some embodiments of the present disclosure;
Fig. 2 is a sectional schematic structural diagram of a maintenance station of a cleaning device according to some embodiments of the present disclosure;
Fig. 3 is a partially enlarged schematic diagram of area M in Fig. 2;
Fig. 4 is a schematic diagram of a wastewater recovery path of a maintenance station of a cleaning device according to some embodiments of the present disclosure;
Fig. 5 is a partially schematic structural diagram of a maintenance station of a cleaning device according to some embodiments of the present disclosure;
Fig. 6 is a partially sectional schematic structural diagram of a maintenance station of a cleaning device according to some embodiments of the present disclosure;
Fig. 7 is a three-dimensional schematic structural diagram of a valve apparatus according to some embodiments of the present disclosure;
Fig. 8 is a schematic structural diagram of a valve apparatus in a closed state according to some embodiments of the present disclosure;
Fig. 9 is a schematic structural diagram of a valve apparatus in an open state according to some embodiments of the present disclosure;
Fig. 10 is a schematic structural diagram of an air duct of a self-cleaning system according to some embodiments of the present disclosure;
Fig. 11 is a schematic structural diagram of a pipe duct of a wastewater tank of a self-cleaning system according to some embodiments of the present disclosure;
Fig. 12 is a schematic structural diagram of a pressure relief valve according to some embodiments of the present disclosure;
Fig. 13 is a partially sectional schematic structural diagram of a maintenance station according to some embodiments of the present disclosure;
Fig. 14 is a schematic structural diagram of an accommodating cavity according to some embodiments of the present disclosure;
Fig. 15 is a sectional schematic structural diagram of a chassis of a maintenance station according to some embodiments of the present disclosure;
Fig. 16 is a sectional schematic structural diagram of the other side of a chassis of a maintenance station according to some embodiments of the present disclosure; and
Fig. 17 is an enlarged schematic structural diagram of a part A in Fig. 16.

### DETAILED DESCRIPTION

To make the objectives, technical solutions, and advantages of the embodiments of the present disclosure clearer, the following describes the present disclosure in detail with reference to the accompanying drawings. Apparently, the described embodiments are some but not all of the embodiments of the present disclosure. All other embodiments obtained by those of ordinary skill in the art based on the embodiments of the present disclosure without creative efforts should fall within the protection scope of the present disclosure.

It should also be noted that, the terms "comprise", "include", or any other variants thereof are intended to cover the nonexclusive inclusion, such that a commodity or device including a series of elements includes not only those elements, but also other elements not listed explicitly or elements inherent to such a commodity or device. Without more limitations, the element defined by the phrase "including a" does not exclude the existence of other same elements in the commodity or device including the element.

In the art, there are cleaning devices, such as hand-held floor scrubbers and autonomous sweeping and mopping all-in-one robots. The cleaning device usually has a wastewater tank, a clean water tank, and a main suction fan. A cleaning seat body includes cleaning components for mopping, such as cleaning rollers, and the number of the cleaning components may be one, two or more. A cleaning liquid from the clean water tank, such as clean water, is sprayed on the cleaning component and/or a surface to be cleaned through a built-in water pipe, and the cleaning component moves to mop the floor. In addition, the main fan forms a negative pressure in a device air duct of the cleaning device to draw the wastewater (which may contain solid debris) on the cleaned surface from a waste suction port of the cleaning device and convey the same into a wastewater tank. Volumes of the wastewater tank and the clean water tank in the floor scrubber are limited. In order to avoid frequent manual cleaning of the wastewater tank and/or the injection of the clean water into the clean water tank, a maintenance station matching the floor scrubber is designed. After the cleaning device returns to the maintenance station, the wastewater in the wastewater tank may be recovered to the maintenance station, the clean water may also be replenished into the clean water tank through the maintenance station, and the cleaning device, such as the floor scrubber, may also be charged through a charging interface of the maintenance station.

In some related arts, due to long-term storage of the wastewater in the maintenance station, the wastewater possibly produces foul gas and peculiar smell, and the wastewater and peculiar smell are possibly discharged to the outside, thereby causing discomfort to users.

The present disclosure provides a maintenance station of a cleaning device. The cleaning device includes: an isolation cavity having a wastewater outlet, wherein the isolation cavity is configured to be connected with a wastewater tank of the cleaning device and is operably in fluid communication with the wastewater tank when the cleaning device returns to the maintenance station; and an isolation valve arranged at the wastewater outlet and configured to be switched between an open state and a closed state. When the isolation valve is in the open state, wastewater in the isolation cavity can be discharged through the wastewater outlet, and when the isolation valve is in the closed state, the wastewater outlet is blocked. According to the present disclosure, the isolation cavity with the isolation valve is arranged in a contaminant recovery path of the maintenance station, so that discomfort to the users caused by the fact that the foul gas generated by long-term presence of the wastewater and/or the foul gas generated in a wastewater discharge pipe enter the isolation cavity and are then discharged to the outside is avoided.

Optional embodiments of the present disclosure will be described in detail below in combination with the accompanying drawings.

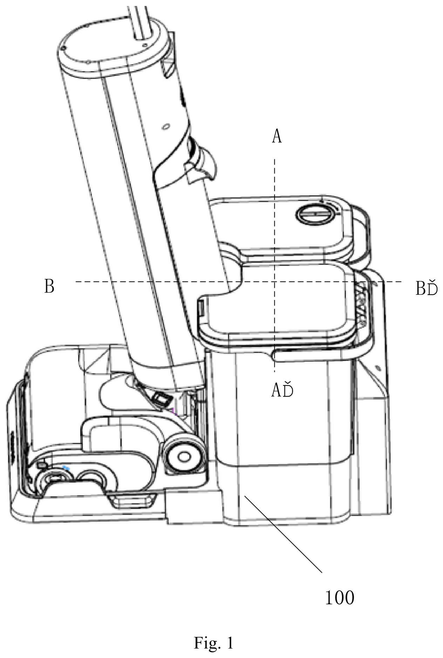

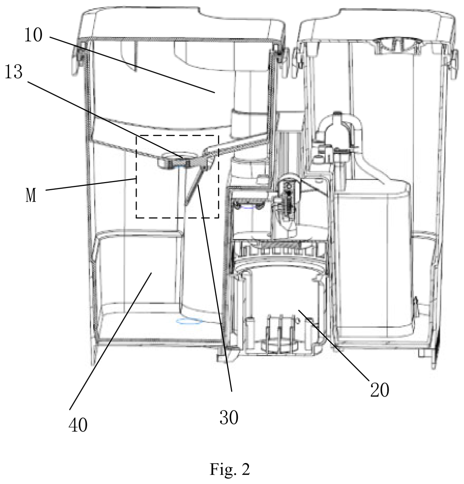

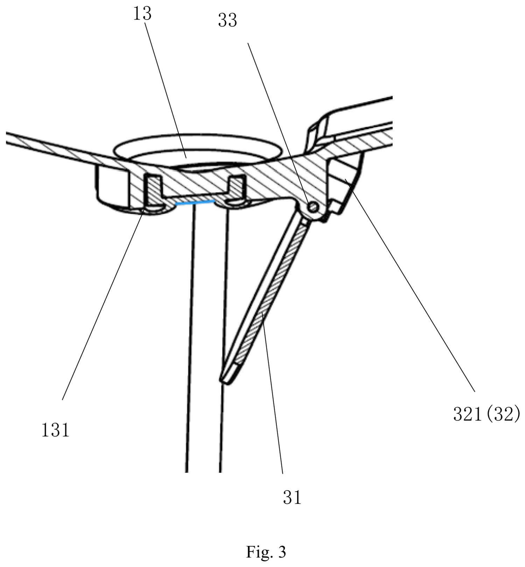

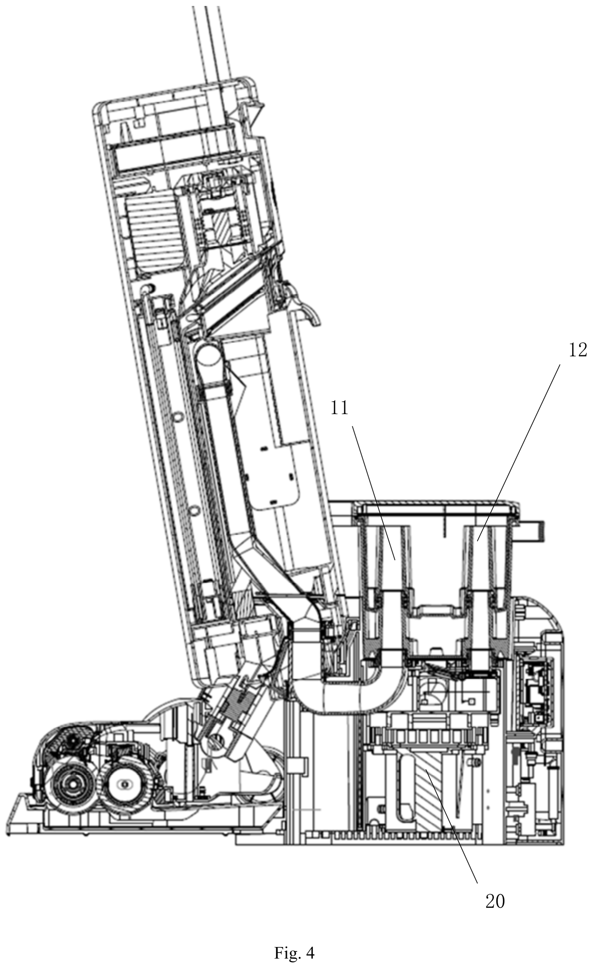

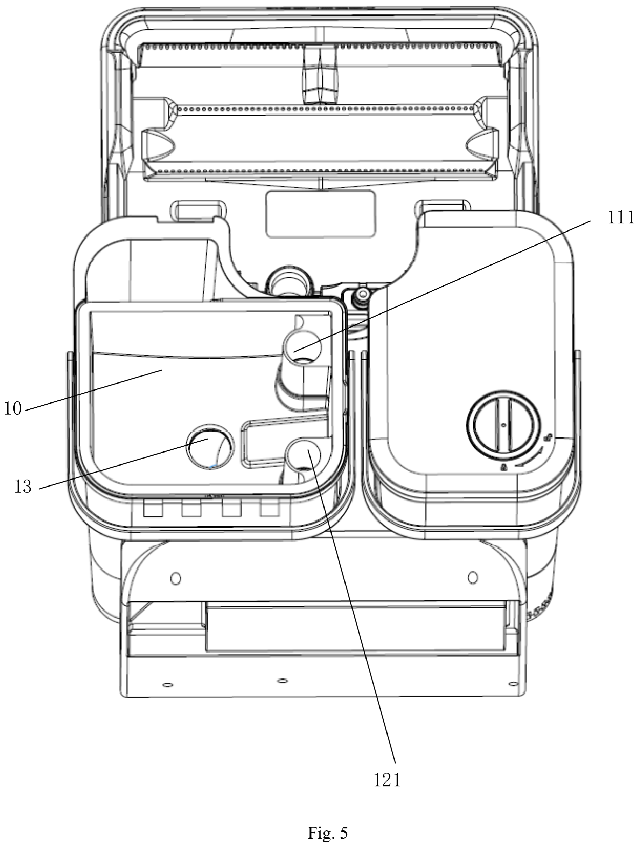

Fig. 1 is a schematic diagram of a usage scenario of a maintenance station of a cleaning device according to some embodiments of the present disclosure; Fig. 2 is a sectional schematic structural diagram of a maintenance station of a cleaning device according to some embodiments of the present disclosure, which is a sectional schematic structural diagram along line A-A' in Fig. 1; Fig. 3 is a partially enlarged schematic diagram of an area M in Fig. 2; Fig. 4 is a schematic diagram of a wastewater recovery path of a maintenance station of a cleaning device according to some embodiments of the present disclosure, which is a sectional schematic structural diagram along line B-B' in Fig. 1; and Fig. 5 is a partial schematic structural diagram of a maintenance station of a cleaning device according to some embodiments of the present disclosure, with a top cover of an isolation cavity not shown.

As shown in Fig. 1 to Fig. 5, some embodiments of the present disclosure provide a maintenance station 100 of a cleaning device, and the maintenance station 100 includes an isolation cavity 10 and an isolation valve 30.

The isolation cavity 10 has a wastewater outlet 13, is configured to be connected with a wastewater tank of the cleaning device, such as a floor scrubber, when the cleaning device returns to the maintenance station, and is operably in fluid communication with the wastewater tank. The isolation cavity 10 is configured such that when the isolation cavity 10 is in fluid communication with the wastewater tank after the cleaning device returns to the maintenance station, wastewater in the wastewater tank may flow into the isolation cavity 10. Optionally, the wastewater outlet 13 is located at the lowest point of the bottom of the isolation cavity 10, which is convenient for the wastewater to flow from the isolation cavity 10 into a recovery tank 40 under gravity.

The isolation valve 30 is arranged at the wastewater outlet 13 and is configured to be switched between an open state and a closed state. When the isolation valve 30 is in the open state, the wastewater in the isolation cavity 10 can be discharged through the wastewater outlet 13, and when the isolation valve is in the closed state, the wastewater outlet 13 is blocked to prevent foul gas from entering the isolation cavity through the wastewater outlet 13.

According to the present disclosure, the isolation cavity with the isolation valve is arranged in a contaminant recovery path of the maintenance station, so that the discomfort to the users caused by the fact that the foul gas generated by long-term presence of the wastewater and/or the foul gas generated in a wastewater discharge pipe enter the isolation cavity and are then discharged to the outside is avoided.

In some embodiments, as shown in Fig. 1 to Fig. 5, the isolation cavity 10 further has a wastewater inlet channel 11 and an air outlet channel 12, the wastewater inlet channel 11 is configured to be operably in fluid communication with the wastewater tank of the cleaning device, such as the floor scrubber, when the cleaning device returns to the maintenance station 100, and the wastewater in the wastewater tank of the cleaning device may enter the isolation cavity 10 through the wastewater inlet channel 11, thereby recovering the wastewater in the cleaning device into the maintenance station 100.

The maintenance station 100 also includes a suction fan 20 which is, for example, arranged below the isolation cavity 10 and communicated with the air outlet channel 12 of the isolation cavity 10. The suction fan 20 provides power for the recovery of the wastewater from the cleaning device to the maintenance station 100, that is, when the suction fan 20 works, a vacuum may be formed in the isolation cavity 10, and the wastewater in the wastewater tank of the cleaning device may enter the isolation cavity 10 through the wastewater inlet channel 11 under the effect of the vacuum negative pressure.

In some other embodiments, when the isolation cavity is connected with the wastewater tank of the cleaning device, the isolation cavity is located at a lower elevation than the wastewater tank, so that the wastewater in the wastewater tank can flow into the isolation cavity under gravity. In this case, the suction fan may be omitted.

In some embodiments, as shown in Fig. 1 to Fig. 5, the maintenance station 100 further includes a recovery tank 40, the recovery tank 40 is selectively in fluid communication with the isolation cavity 10 through the isolation valve 30, and the recovery tank 40 is configured to store the wastewater discharged through the wastewater outlet 13. The recovery tank 40 may be arranged below the isolation box 10 and configured to recover the wastewater discharged through the wastewater outlet 13. When the isolation valve 30 is in the open state, the wastewater in the isolation cavity 10 is recovered to the recovery tank 40 through the wastewater outlet 13, and when the isolation valve 30 is in the closed state, the wastewater outlet 13 is blocked to prevent the foul gas and peculiar smell generated in the recovery tank 40 from entering the isolation cavity 10 through the wastewater outlet 13 and then spreading to the outside.

In other embodiments, the maintenance station includes a wastewater discharge pipe directly connected to the wastewater outlet 13, and at least a portion of the isolation valve 30 is arranged in the wastewater discharge pipe. The wastewater discharge pipe is selectively in fluid communication with the isolation cavity 10 through the isolation valve 30, and the wastewater in the isolation cavity 10 can be directly discharged, for example, into an indoor sewer in a life application scenario.

In some embodiments, as shown in Fig. 1 to Fig. 5, the isolation valve 30 includes an isolation valve body 31 and a restoring structure 32. The isolation valve body 31 is configured to block the wastewater outlet 13, and is, for example, a sheet structure, a plug pile structure, etc. The restoring structure 32 is configured such that the isolation valve 30 tends to be in the closed state, that is, under normal conditions and under the effect of the restoring structure 32, the isolation valve 30 is in the closed state, that is, the isolation valve body 31 blocks the wastewater outlet 13.

Specifically, when there is no wastewater in the isolation cavity 10 and the suction fan 20 does not work, the isolation valve 30 is in a closed state under the effect of the restoring structure 32. That is to say, when the cleaning device, such as the floor scrubber, has not returned to the maintenance station, or after the cleaning device, such as the floor scrubber, has returned to the maintenance station and completed the wastewater recovery work and the wastewater in the isolation cavity 10 has been completely discharged, all the wastewater in the isolation cavity 10 has been discharged into the recovery tank 40 at this time, the isolation valve 30 is in the closed state under the effect of the restoring structure 32, and the isolation valve 30 blocks the wastewater outlet to prevent the foul gas and peculiar smell generated in the recovery tank 40 from entering the isolation cavity 10 through the wastewater outlet 13 and then spreading to the outside.

When the maintenance station 100 performs a wastewater recovery operation, the suction fan 20 works, the wastewater is temporarily stored in the isolation cavity 10, and the isolation valve 10 is in the closed state under the effect of a suction force of the suction fan 20. That is to say, when the cleaning device, such as the floor scrubber, returns to the maintenance station for wastewater recovery, the wastewater inlet channel 11 of the isolation cavity 10 is communicated with the wastewater tank of the cleaning device, and the suction fan 20 communicated with the air outlet channel 12 of the isolation cavity 10 starts working and suck the gas in the isolation cavity 10, so that the negative pressure is formed in the isolation cavity 10, and the wastewater in the wastewater tank of the cleaning device is drawn into the isolation cavity 10 under the effect of the negative pressure. At this time, the wastewater entering the isolation cavity 10 is temporarily stored in the isolation cavity 10, and the isolation valve 30 overcomes the gravity of the wastewater temporarily stored in the isolation cavity 10 under the effect of the negative pressure and the restoring structure 32, and still remains in the closed state.

When the maintenance station 100 completes the wastewater recovery operation and the suction fan 20 stops working, the isolation valve 30 is switched from the closed state to the open state under the effect of the gravity of the wastewater, so that the wastewater in the isolation cavity 10 is discharged through the wastewater outlet 13, for example, into the recovery tank 40. That is to say, after the wastewater in the cleaning device, such as the floor scrubber, is discharged into the isolation cavity 10 of the maintenance station 100 to be temporarily stored, the suction fan 20 stops working, the negative pressure formed in the isolation cavity 10 disappears, and the isolation valve 30 is switched from the closed state to the open state under the effect of the gravity of the wastewater. The gravitational force of the wastewater temporarily stored in the isolation cavity 10 is obviously greater than the restoring force of the restoring structure 32. At this time, the wastewater in the isolation cavity 10 is discharged out of the isolation cavity 10 through the wastewater outlet 13, and, for example, collected into the recovery tank 40.

After the wastewater in the isolation cavity 10 is basically completely discharged out of the isolation cavity 10, the isolation valve 30 is switched from the open state to the closed state under the effect of the restoring structure 32, and the wastewater outlet 13 is blocked to prevent the foul gas from entering the isolation cavity 10 through the wastewater outlet 13.

In some embodiments, as shown in Fig. 1 to Fig. 5, the isolation valve 30 is pivotally connected with an edge of the wastewater outlet 13 through a rotating shaft 33, the restoring structure 32 includes a counterweight structure 321, and the counterweight structure 321 and the isolation valve body 31 are arranged on both sides of the rotating shaft 33 respectively, so that the isolation valve 30 tends to be in the closed state.

Specifically, the counterweight structure 321 has a predetermined weight, and the counterweight structure 321 and the isolation valve body 31 form a lever structure relative to the rotating shaft 33. Under the effect of the gravity of the counterweight structure 321, the isolation valve 30 tends to be in the closed state, that is, under normal conditions, the isolation valve 30 is in the closed state, and the isolation valve body 31 blocks the wastewater outlet 13.

In this case, when the cleaning device, such as the floor scrubber, does not return to the maintenance station, the isolation valve 30 is in the closed state under the effect of the gravity of the counterweight structure 321, and the isolation valve 30 blocks the wastewater outlet, so as to prevent the foul gas and peculiar smell generated in the recovery tank 40 from entering the isolation cavity 10 through the wastewater outlet 13 and then spreading to the outside. When the cleaning device, such as the floor scrubber, returns to the maintenance station for wastewater recovery, the wastewater inlet channel 11 of the isolation cavity 10 is communicated with the wastewater tank of the cleaning device, and the suction fan 20 communicated with the air outlet channel 12 of the isolation cavity 10 starts working and suck the gas in the isolation cavity 10, so that the negative pressure is formed in the isolation cavity 10, and the wastewater in the wastewater tank of the cleaning device is drawn into the isolation cavity 10 under the effect of the negative pressure. At this time, the wastewater entering the isolation cavity 10 is temporarily stored in the isolation cavity 10, and the isolation valve 30 overcomes the gravity of the wastewater temporarily stored in the isolation cavity 10 under the effects of the negative pressure and counterweight structure 321, and still remains in the closed state. After the wastewater in the cleaning device, such as the floor scrubber, is discharged into the isolation cavity 10 of the maintenance station 100 to be temporarily stored, the suction fan 20 stops working, and the isolation valve 30 is switched from the closed state to the open state under the effect of the gravity of the wastewater. The gravitational force of the wastewater temporarily stored in the isolation cavity 10 is obviously greater than the restoring force of the counterweight structure 321. At this time, the wastewater in the isolation cavity 10 is discharged out of the isolation cavity 10 through the wastewater outlet 13, and, for example, collected into the recovery tank 40. After the wastewater in the isolation cavity 10 is basically completely discharged out of the isolation cavity 10, the isolation valve 30 is switched from the open state to the closed state under the effect of the gravity of the counterweight structure 321, and the wastewater outlet is blocked to prevent the foul gas from entering the isolation cavity 10 through the wastewater outlet.

In some embodiments, the isolation valve is pivotally connected with the edge of the wastewater outlet through the rotating shaft, and the restoring structure 32 includes a spring structure, which is arranged at the rotating shaft 33, so that the isolation valve 30 tends to be in the closed state.

Specifically, the spring structure is, for example, an elastic sheet, a torsion spring, etc. Under the effect of an elastic force of the spring structure, the isolation valve 30 tends to be in the closed state, that is, under normal conditions, the isolation valve 30 is in the closed state, and the isolation valve body 31 blocks the wastewater outlet 13.

In this case, when the cleaning device, such as the floor scrubber, does not return to the maintenance station, the isolation valve 30 is in the closed state under the effect of the elastic force of the spring structure, and the isolation valve 30 blocks the wastewater outlet, so as to prevent the foul gas and peculiar smell generated in the recovery tank 40 from entering the isolation cavity 10 through the wastewater outlet 13 and then spreading to the outside. When the cleaning device, such as the floor scrubber, returns to the maintenance station for wastewater recovery, the wastewater inlet channel 11 of the isolation cavity 10 is communicated with the wastewater tank of the cleaning device, and the suction fan 20 communicated with the air outlet channel 12 of the isolation cavity 10 starts working and suck the gas in the isolation cavity 10, so that the negative pressure is formed in the isolation cavity 10, and the wastewater in the wastewater tank of the cleaning device is drawn into the isolation cavity 10 under the effect of the negative pressure. At this time, the wastewater entering the isolation cavity 10 is temporarily stored in the isolation cavity 10, and the isolation valve 30 overcomes the gravity of the wastewater temporarily stored in the isolation cavity 10 under the effects of the negative pressure and the elastic force of the spring structure, and still remains in the closed state. After the wastewater in the cleaning device, such as the floor scrubber, is discharged into the isolation cavity 10 of the maintenance station 100 to be temporarily stored, the suction fan 20 stops working, and the isolation valve 30 is switched from the closed state to the open state under the effect of the gravity of the wastewater. The gravitational force of the wastewater temporarily stored in the isolation cavity 10 is obviously greater than the force exerted by the spring structure. At this time, the wastewater in the isolation cavity 10 is discharged out of the isolation cavity 10 through the wastewater outlet 13, and, for example, collected into the recovery tank 40. After the wastewater in the isolation cavity 10 is basically completely discharged out of the isolation cavity 10, the isolation valve 30 is switched from the open state to the closed state under the effect of the elastic force of the spring structure, and the wastewater outlet is blocked to prevent the foul gas from entering the isolation cavity 10 through the wastewater outlet.

In some embodiments, a sealing gasket 131 is arranged on the edge of the wastewater outlet 13, so that when the isolation valve 30 is in the closed state, the foul gas cannot enter the isolation cavity through the wastewater outlet 13. For example, when the isolation valve 30 is in the closed state, the isolation cavity 10 and the recovery tank 40 are in a sealed and isolated state, so that the foul gas in the recovery tank 40 cannot enter the isolation cavity 10 and be spread to the outside.

Such an arrangement ensures that the foul gas cannot enter the isolation cavity 10 and also ensures the gas quality in the isolation cavity 10. When the maintenance station 100 performs an operation for wastewater and activates the fan, the gas in the isolation cavity 10 is collected to the outside by the suction fan, and the foul gas will not be spread.

In some embodiments, as shown in Fig. 1 to Fig. 5, an outlet 111 of the wastewater inlet channel 11 and an inlet 121 of the air outlet channel 12 are located at the upper part of the isolation cavity 10, and the wastewater outlet 13 is located at the bottom of the isolation cavity. Specifically, the wastewater inlet channel 11 and the air outlet channel 12 in the isolation cavity 10 are basically arranged in parallel in the vertical direction, and the outlet 111 of the wastewater inlet channel 11 is arranged at the upper part of the isolation cavity 10, for example, at a position close to the top of the isolation cavity 10. Such an arrangement can prevent the wastewater from being scattered or flowing back to the cleaning device caused by the fact that the wastewater temporarily stored in the isolation cavity 10 flows back to the wastewater inlet channel 11. The inlet 121 of the air outlet channel 12 is also arranged at the upper part of the isolation cavity 10, for example, at a position close to the top of the isolation cavity 10. Such an arrangement prevents the wastewater temporarily stored in the isolation cavity 10 from entering the air outlet channel 12, thereby avoiding damage to the suction fan 20.

In some embodiments, the outlet 111 of the wastewater inlet channel 11 and the inlet 121 of the air outlet channel 12 are spaced at a predetermined distance. Due to such an arrangement, in the process in which the maintenance station activates the suction fan 20 to carry out the wastewater recovery operation, the wastewater discharged from the outlet 111 of the wastewater inlet channel 11 has sufficient conditions to completely fall into the isolation cavity 10 under its own weight, and the wastewater discharged from the outlet 111 of the wastewater inlet channel 11 is prevented from being directly drawn into the air outlet channel 12, thereby avoiding damage to the suction fan 20.

In some embodiments, the isolation valve 30 is, for example, an electric control valve, which may perform an opening operation and a closing operation through control signals.

When there is no wastewater in the isolation cavity 10 and the suction fan 20 does not work and when the maintenance station 100 performs the wastewater recovery operation and the suction fan 20 works, the isolation valve 30 is in the closed state. When the maintenance station 100 completes the wastewater recovery operation and the suction fan 20 stops working, the isolation valve 30 receives an opening control signal and switches from the closed state to the open state, so that the wastewater in the isolation cavity 10 is discharged through the wastewater outlet.

In some embodiments, the maintenance station 100 includes a processor, and the processor in the maintenance station 100 sends the opening control signal to the isolation valve 30 in response to the suction fan 20 being deactivated.

In some embodiments, after the wastewater in the isolation cavity 10 is completely discharged through the wastewater outlet, the isolation valve 30 receives a closing control signal and switches from the open state to the closed state.

In some embodiments, the processor in the maintenance station 100 sends the closing control signal to the isolation valve 30 in response to a predetermined time elapsing after the suction fan 20 is deactivated. The predetermined time is set according to the time required for discharging the wastewater in the isolation cavity 10.

In some embodiments, a liquid level detection apparatus, such as a float, an electrode, a capacitor or a Hall detection element, is arranged in the isolation cavity 10. When the liquid level detection apparatus detects that there is no liquid in the isolation cavity 10, the processor in the maintenance station 100 sends the closing control signal to the isolation valve 30.

Specifically, when the cleaning device, such as the floor scrubber, does not return to the maintenance station, the isolation valve 30 is in the closed state, and the isolation valve 30 blocks the wastewater outlet 13, so as to prevent the foul gas and peculiar smell generated in the recovery tank 40 from entering the isolation cavity 10 through the wastewater outlet 13 and further spreading to the outside. When the cleaning device, such as the floor scrubber, returns to the maintenance station for wastewater recovery, the wastewater inlet channel 11 of the isolation cavity 10 is communicated with the wastewater tank of the cleaning device, and the suction fan 20 communicated with the air outlet channel 12 of the isolation cavity 10 starts working and suck the gas in the isolation cavity 10, so that the negative pressure is formed in the isolation cavity 10. Under the effect of the negative pressure, the wastewater in the wastewater tank of the cleaning device is drawn into the isolation cavity 10. At this time, the wastewater entering the isolation cavity 10 is temporarily stored in the isolation cavity 10 and the isolation valve 300 still remains in the closed state. After the wastewater in the cleaning device, such as the floor scrubber, is discharged into the isolation cavity 10 of the maintenance station 100 to be temporarily stored, the suction fan 20 stops working, and the isolation valve 30 receives the opening control signal and switches from the closed state to the open state. The gravitational force of the wastewater temporarily stored in the isolation cavity 10 is obviously greater than the force exerted by the counterweight structure 321. At this time, the wastewater in the isolation cavity 10 is discharged out of the isolation cavity 10 from the wastewater outlet 13, and, for example, collected into the recovery tank 40. After the wastewater in the isolation cavity 10 is basically completely discharged out of the isolation cavity 10, the isolation valve 30 receives the closing control signal and switches from the open state to the closed state, and the wastewater outlet is blocked to prevent the foul gas from entering the isolation cavity 10 through the wastewater outlet.

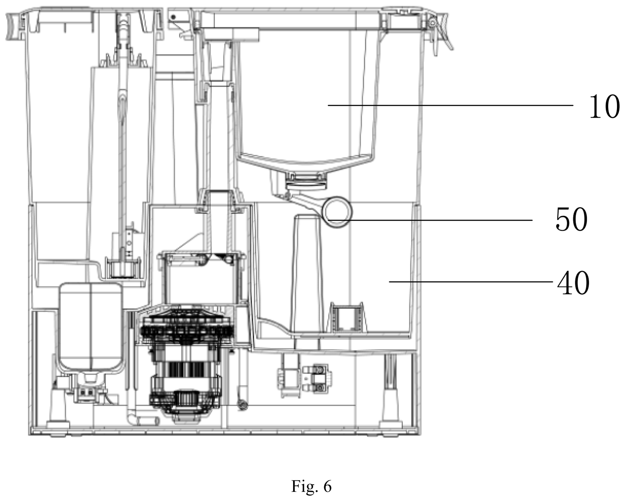

In some embodiments, the maintenance station further includes a detection element. As shown in Fig. 6, the detection element is arranged at any position of the recovery tank 40 or the isolation cavity 10 of the maintenance station, for example, at the bottom or a side wall of the isolation cavity 10. The detection element is used for detecting whether the recovery tank 40 and/or the isolation cavity 10 are/is assembled on the maintenance station. When the recovery tank 40 and/or the isolation cavity 10 are/is not assembled on the maintenance station, an alarm signal is given to remind the user of assembling the recovery tank 40 and/or the isolation cavity 10 to avoid contamination to the maintenance station after waste suction. The detection element may also be used for detecting the position of the wastewater in the recovery tank 40. For example, when the wastewater in the wastewater tank begins to rise and does not reach the maximum water level, no alarm signal will be given, and when the wastewater in the wastewater tank begins to rise and reaches the maximum water level, the alarm signal will be given, which indicates that the wastewater tank is full at this time and reminds the user of treating the wastewater in the recovery tank. The detection element may be any sensor capable of performing position detection, such as a Hall element and an NFC element. As an example, the detection element includes a wastewater float 50, and the wastewater float 50 is arranged at the bottom of the isolation cavity 10, that is, at the maximum liquid level in the recovery tank 40 at which the liquid can be contained, and thus can be configured to detect whether the isolation cavity 10 and/or the recovery tank 40 are in place and/or whether the recovery tank 40 is full of water.

Specifically, since the isolation cavity 10 needs to be assembled together with the recovery tank 40, and cannot be assembled separately, in-place information of the isolation cavity and the recovery tank may be detected together. When the isolation cavity 10 and/or the recovery tank 40 are not assembled on the maintenance station, the detection element detects no wastewater float 50 and gives an alarm signal. When the isolation cavity 10 and the recovery tank 40 are assembled on the maintenance station for wastewater recovery, the recovery tank 40 is empty and the wastewater float is at the lowest position. At this time, the detection element can detect the position of the wastewater float. As the water level in the recovery tank 40 rises, when the recovery tank 40 is full of water, the wastewater float exceeds the maximum water level of the wastewater tank. At this time, the detection element detects no wastewater float and outputs alarm information. The different states corresponding to the information of the detection element in different positions may be set according to actual requirements. For example, if only the full water information of the wastewater tank needs to be detected, a detection signal exists when the wastewater float is at the position of the maximum water level.

Some embodiments of the present disclosure provide a cleaning system, including the maintenance station according to the preceding embodiments and a cleaning device, such as a floor scrubber.

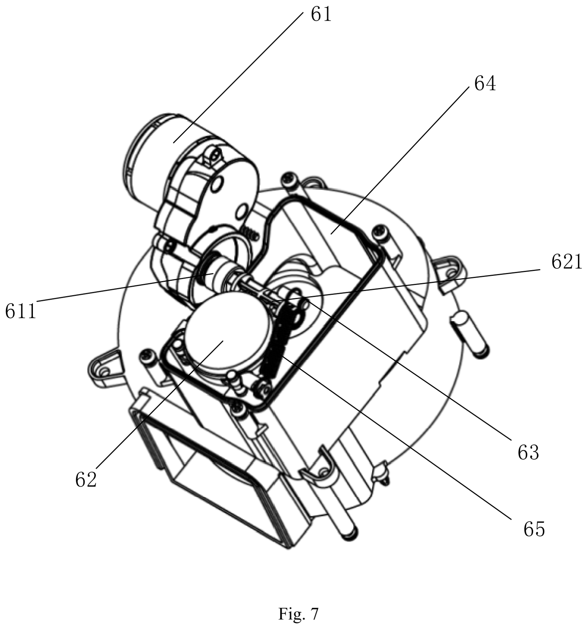

Some embodiments of the present disclosure provide a valve apparatus 60, and Fig. 7 is a three-dimensional schematic structural diagram of the valve apparatus according to an embodiment of the present disclosure. As shown in Fig. 7, the valve apparatus 60 is arranged in a fluid passage of a power source, such as the suction fan 20, wherein the power source is used for providing power for the opening and closing of the valve apparatus, including but not limited to various fans, motors, etc., and the valve apparatus 60 is used for opening or closing the fluid passage. Specifically, the valve apparatus 60 includes: a driving apparatus 61 for providing a driving force, for example, the driving apparatus 61 is used for providing a driving force for reciprocating rotation within the range of at least 180 degrees, and the driving apparatus 61 achieves reciprocating rotation under the control of the processor, and may achieve reciprocating rotation at any angle within the range of 0-180 degrees under the control of the processor. The valve apparatus 60 further includes: a valve body 62, and the valve body 62 is connected with the driving apparatus 61, and is configured to be switched between a first position and a second position under the driving of the driving apparatus 61. When the valve body 62 is in the first position, the valve body 62 closes the fluid passage, and when the valve body 62 is in the second position, the valve body 62 opens the fluid passage. A maintenance structure is configured to maintain a state in which the valve body 60 is in the first position or the second position.

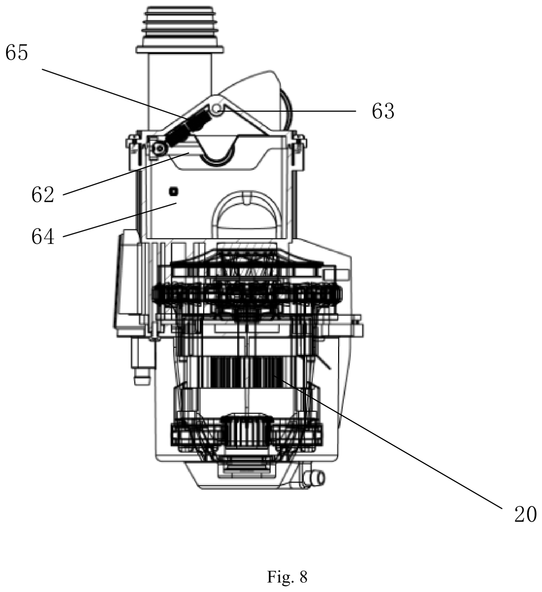

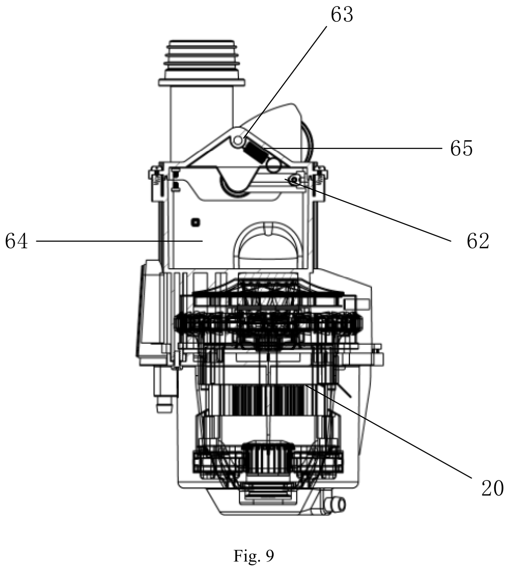

Fig. 8 is a schematic structural diagram of a valve apparatus in a closed state according to an embodiment of the present disclosure, and Fig. 9 is a schematic structural diagram of a valve apparatus in an open state according to an embodiment of the present disclosure. Under the driving of the driving apparatus 61, the valve body 62 is switched between the first position and the second position. When the valve body 62 is in the first position, the valve body 62 closes the fluid passage, and when the valve body 62 is in the second position, the valve body 62 opens the fluid passage. Under normal conditions, the closing of the fluid passage by the valve apparatus 60 corresponds to the closing of the power source, and the opening of the fluid passage by the valve apparatus 60 corresponds to the opening of the power source. Specifically, in response to a deactivation signal of the power source, such as the suction fan 20, the driving apparatus 61 drives the valve body 62 to be in the first position and closes the fluid passage, which avoids the reduction of a negative pressure suction force generated at the brush head side during air suction of a fan on the cleaning device side caused by air leakage at the valve apparatus 60 when the cleaning device is in the mode, such as a self-cleaning mode, that needs to operate the fan on the cleaning device side. In response to an activation signal of the power source, such as the suction fan 20, the driving apparatus 61 drives the valve body 62 to be in the second position and opens the fluid passage, which may initiate a wastewater recovery function.

In some embodiments, the opening or closing action of the valve apparatus may be before or after the activation or deactivation action of the power source, and the valve apparatus and the power source may also be controlled to act simultaneously. Specifically, before/after/while the power source, such as the suction fan, is deactivated, the driving apparatus 61 drives the valve body 62 to be in the first position to close the fluid passage, so as to ensure that the fluid passage is closed punctually and prevent air leakage; and/or before/after/while the power source, such as the suction fan, is activated, the driving apparatus 61 drives the valve body 62 to be in the second position to open the fluid passage, so as to ensure that the fluid passage is opened punctually and the gas passage is unobstructed.

In some embodiments, as shown in Fig. 7 to Fig. 9, the valve apparatus 60 further includes a valve rotating shaft 621, and the valve rotating shaft 621 is of a hollow structure, for example, a hollow cylindrical structure or a hollow prism structure, such as a triangular prism or a quadrangular prism, and sleeves an output shaft 611 of the driving apparatus 61. In order to reduce a rotational backlash between the valve rotating shaft 621 and the output shaft 611, it is preferred to arrange the valve rotating shaft 621 as the hollow prism structure. In this way, under the driving of the driving apparatus 61, the valve rotating shaft 621 drives the valve body 62 to be switched between the first position and the second position. Optionally, the valve rotating shaft 621 and the valve body 62 are integrally molded to further reduce the rotational backlash between the valve rotating shaft 621 and the valve body 62. In some embodiments, a locking structure is arranged at an end of the valve rotating shaft 621 close to the driving apparatus 61 to achieve locking with the end part of the output shaft 611. After the valve rotating shaft 621 sleeves the output shaft 611, the locking can be achieved, which further reduces the rotational backlash between the valve rotating shaft 621 and the output shaft 611.

In some embodiments, the valve apparatus 60 further includes a cavity body 64, and the cavity body 64 consists of four side walls, a top plate and a bottom plate. The cavity body 64 has a sufficient accommodation space for accommodating the valve body 62, the cavity body 64 is configured to provide the sufficient accommodation space when the valve body 62 is switched between the first position and the second position, that is, the depth of the cavity body 64 is at least greater than the length of the valve body 62, and the length of the cavity body 64 is at least great than twice the length of the valve body 62. In some embodiments, the cavity body 64 includes a first opening and a second opening, the first opening and the second opening are configured to be communicated with the fluid passage, and the valve body closes the first opening or the second opening. The first opening, such as an air duct port, is arranged at the top of the cavity body, and the air duct port is communicated with an air duct. When the valve body 62 is in the first position, the valve body 62 closes the air duct port. The cavity body 64 also includes the second opening, such as a fan port, and the fan port is arranged at the bottom of the cavity body and is in fluid communication with the suction fan 20. When the suction fan 20 is activated, the valve body 62 is opened, and a suction airflow enters the suction fan 20 from the air duct port, the cavity body 64 and the fan port.

In some embodiments, as shown in Fig. 7 to Fig. 9, the driving apparatus 61 is arranged at the outer side of the cavity body 64, the output shaft 611 of the driving apparatus 61 extends into the cavity body 64 through the side wall of the cavity body 64 to be connected with the valve rotating shaft 621, and a root of the output shaft 611 is clamped on the side wall of the cavity body 64.

In some embodiments, as shown in Fig. 7, the maintenance structure includes a support member 63, and the support member 63 is fixed at an elevated position relative to the valve body 62, for example, at the top plate of the cavity body 64, approximately above the valve rotating shaft 621, thereby forming a vertical pulling force; and the support member 63 may be, for example, a fixed rod, a protrusion, a buckle, etc., and is not limited thereto.

In some embodiments, due to the inherent rotation clearance problem of the driving apparatus 61, the valve body 62 is possibly incapable of closing the air duct port tightly in the first position, and possibly incapable of fitting tightly the top of the cavity body in the second position, which affects wastewater discharge efficiency of the cavity body. Therefore, the valve apparatus 60 further includes an elastic member 65, one end of the elastic member 65 is connected with the support member 63, the other end of the elastic member 65 is connected with the valve body 62, and the elastic member 65 is configured such that the valve body 62 is switched between the first position and the second position along with the rotation of the driving apparatus 61 to apply a pulling force to the valve body towards the first position or the second position. Therefore, the valve body 62 tightly closes the air duct port in the first position and tightly fits the top of the cavity body in the second position. For example, the other end of the elastic member 65 is connected with a laterally protruding fixing part of the valve body 62, and the fixing part is approximately in the same vertical plane as the support member 63. Therefore, the elastic member basically only provides the pulling force in the vertical plane, but does not have a lateral pulling force, to reduce the pulling force loss. The elastic member 65 may be a spring, a tension spring, an elastic rope, an elastic sheet and the like.

By arranging the maintenance structure, the situation that the valve body 62 cannot tightly close the air duct port, and cannot tightly fit the top of the cavity body in the second position caused by falling of the valve body 62 due to the effect of gravity is avoided; and the problem that a gearbox of the driving apparatus 61 is easily stuck as the driving apparatus 61 is used to continuously output the driving force to maintain the state that the valve body 62 tightly closes the air duct port or tightly fits the top of the cavity body in the second position is also avoided.

In some embodiments, as shown in Fig. 7, a side of the valve body 62 facing the air duct has an edge protrusion part, the edge protrusion part is configured to extend into the air duct to seal the air duct port when the valve body closes the air duct, and the edge protrusion part is arranged around the whole valve body 62, and optionally, the edge protrusion part and the valve body 62 are integrally molded.

In some embodiments, the outer edge of the valve body 62 has a sealing gasket, the sealing gasket is configured to further seal the air duct when the valve body 62 closes the air duct, and the sealing gasket is arranged around the whole outer edge of the valve body 62.

Some embodiments of the present disclosure provide a maintenance station, including the valve apparatus according to any one of the preceding embodiments. After the cleaning device is connected with the maintenance station, the valve apparatus of the maintenance station is controlled to open, and at the same time, the suction fan is activated to draw the wastewater in the wastewater tank of the cleaning device into the recovery tank of the maintenance station. After the suction is completed, the suction fan is deactivated and the valve apparatus is closed, so as to avoid the reduction of a negative pressure suction force generated in a waste suction channel between a brush head and the wastewater tank during air suction of the fan on the cleaning device side caused by air leakage at the valve apparatus when the cleaning device is in the working mode, such as a self-cleaning mode.

The valve apparatus according to the embodiment of the present disclosure is arranged in an air duct of the suction fan, and the valve apparatus may be switched between the first position and the second position for opening or closing the air duct, so that a suction passage can be provided when the wastewater is drawn by the suction fan. When the suction fan is deactivated, the following is avoided: the suction force for a roller brush during air suction of the fan on the cleaning device side is reduced due to air leakage at the valve apparatus when the cleaning device cleans the roller brush.

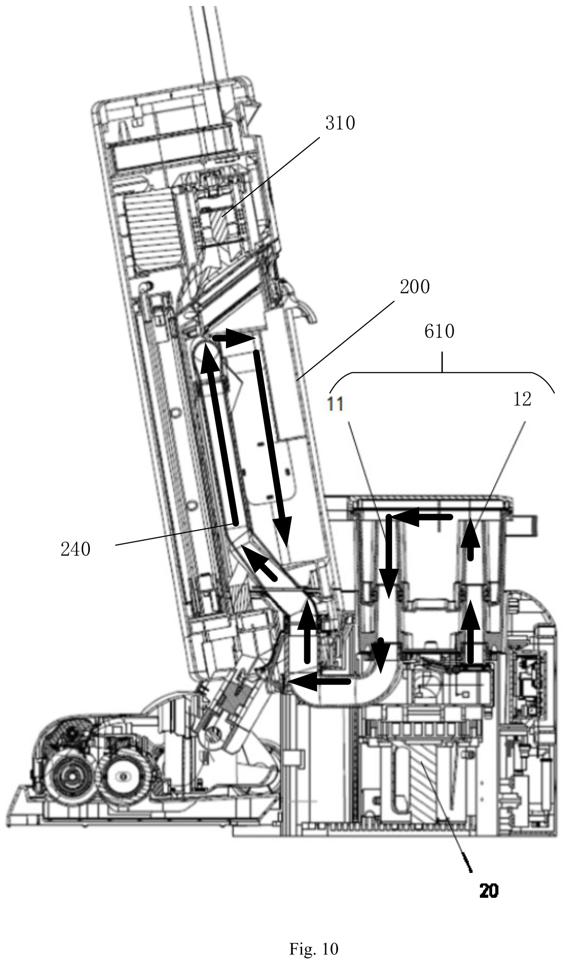

Some embodiments of the present disclosure also provide a self-cleaning system of a wastewater tank. As shown in Fig. 10, some embodiments of the present disclosure provide a surface cleaning device, including a wastewater tank 200 for collecting wastewater recovered from a surface to be cleaned. The wastewater tank 200 includes a wastewater inlet 210, and the wastewater inlet 210 is configured to allow the wastewater to enter the wastewater tank 200 along a wastewater pipe 220 after the wastewater is recovered from the surface to be cleaned, wherein a brush head part and the wastewater tank 200 of the cleaning device are communicated by the wastewater pipe 220. The surface cleaning device includes a first fan 310, and the first fan 310 is arranged on the cleaning device, for example, above the wastewater tank 200. When the cleaning device performs a sweeping task, under the effect of suction of the first fan 310, a negative pressure is formed in the wastewater tank 200, and the wastewater is driven by the roller brush to enter the inlet of the wastewater pipe 220, and then enters the wastewater tank 200 from the wastewater inlet 210 upward along the wastewater pipe 220. The wastewater tank 200 also includes a first opening 230, and the first opening 230 is approximately arranged at the bottom of the wastewater tank 200, and, for example, may be arranged on the bottom surface or the side wall close to the bottom surface of the wastewater tank 200. When the cleaning device executes a self-cleaning instruction of the wastewater tank, airflow enters the wastewater tank 200 from the first opening 230 to oscillate the wastewater in the wastewater tank 200, for example, form a boiling state and the like, and the internal side wall of the wastewater tank 200 achieves self-cleaning under the oscillation of the wastewater.

In some embodiments, the first opening 230 includes a wastewater outlet for discharging the wastewater in the wastewater tank 200. At this time, the wastewater outlet is located at the bottom of the wastewater tank 200 to conveniently discharge all the wastewater in the wastewater tank as much as possible. In this embodiment, when the cleaning device executes the self-cleaning instruction, the wastewater outlet is also used for achieving the self-cleaning of the wastewater tank. Specifically, under the effect of the fan, the airflow enters the wastewater tank 200 from outside the wastewater tank 200 through the wastewater outlet. Due to the presence of the wastewater in the wastewater tank 200, the wastewater will oscillate, such as surge and boil, under the action of the airflow, so that the internal side wall of the wastewater tank 200 will be flushed under the oscillation of the wastewater to achieve self-cleaning. Theoretically, the greater the airflow is, the better the cleaning effect is.

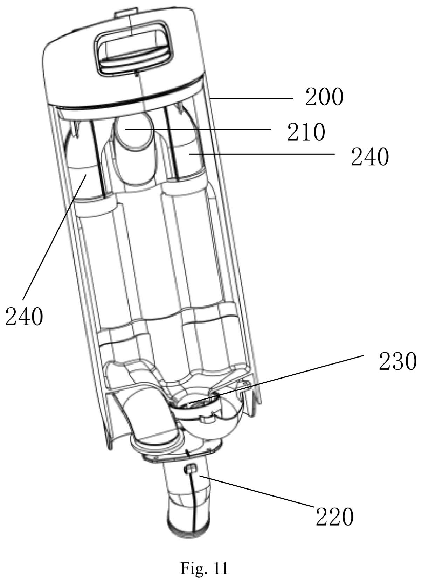

In some embodiments, as shown in Fig. 11, the surface cleaning device further includes a first duct 240, the first opening 230 and external environment are communicated by the first duct 240, and the external airflow may enter the wastewater tank 200 through the first duct 240. Optionally, the first duct 240 has an inner diameter less than or equal to that of the first opening 230.

In some embodiments, the first duct 240 is of an inverted U-shaped structure. As shown in Fig. 11, a side of the first duct 240 extending into the wastewater tank 200 approximately extends downward from the top of the wastewater tank 200 to the bottom of the wastewater tank and is then bent upward to form the first opening 230, that is, the wastewater outlet, the wastewater outlet is formed at the bottom of the wastewater tank to facilitate the outflow of the wastewater during wastewater discharge. The bent part of the first duct 240 at the top of the wastewater tank 200 makes the wastewater difficultly leak from the wastewater tank and eliminates a need for mounting a valve structure at the interface between the first duct 240 and the outside.

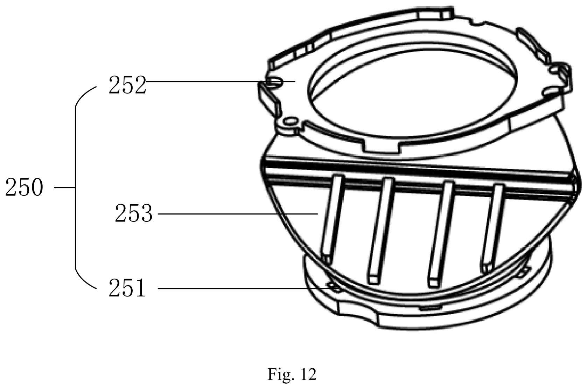

In some embodiments, the surface cleaning device further includes a pressure relief valve 250 configured to seal a second duct 610 connected with the first duct 240. The pressure relief valve 250 is arranged at an airflow inlet end of the first duct 240, and an outlet end of the second duct 610 is connected with the first duct 240 after passing through the pressure relief valve 250 for a preset distance. Specifically, as shown in Fig. 12, the pressure relief valve 250 consists of a first end part 251, a second end part 252 and an intermediate part 253. The first end part 251 and the second end part 252 are of a circular structure with a diameter equivalent to the inner diameter of the first duct 240, and the first end part 251 and the second end part 252 are made of hard materials to form a supporting space sufficient for insertion of the second duct 610. The intermediate part 253 is made of a deformable material, which is in an inward closed and contractible state when not in use. When the second duct 610 is inserted into the pressure relief valve 250, the intermediate part 253 is unfolded to make the second duct 610 be communicated with the first duct 240 after passing through the pressure relief valve 250.

In some embodiments, the valve apparatus 60 may be arranged in an airflow channel. The airflow channel at least includes a channel that extends from the outer side of the wastewater tank 200 into the wastewater tank through the first opening 230. The valve apparatus 60 may be arranged at any position on the outer side of the wastewater tank 200, for example, at one side of the maintenance station, to control the airflow to flow towards the wastewater tank 200 after entering from the side of the maintenance station. The valve apparatus 60 is configured to be opened when the self-cleaning instruction of the wastewater tank is executed, so that the airflow flows into the wastewater tank 200 from the first opening 230.

In some embodiments, the surface cleaning device further includes the first fan 310, the first fan 310 is configured to respond to the self-cleaning instruction of the wastewater tank, and the first fan 310 provides power to make the airflow enter the wastewater tank from the first opening 230. The first fan 310 may be arranged at any position of the surface cleaning device, for example, above or on the side of the wastewater tank 200. By sucking the gas in the wastewater tank 200 through the first fan 310, the negative pressure is formed in the wastewater tank 200, thereby forcing the airflow outside the wastewater tank 200 to flow into the wastewater tank 200. It can be understood that in this process, the first fan 310 is basically located downstream of the first opening 230 in an airflow path, and the airflow path enters the wastewater tank 200 from the exterior of the wastewater tank 200 through the first opening 230 and then extends outside through the first fan 310.

In some embodiments, the surface cleaning device further includes the first fan 310. The power of the airflow comes from a second fan 620. The second fan 620 may be located at any position except that of the first fan 310, which is not particularly limited.

In some embodiments, the second fan 620 is arranged upstream of the first opening 230 in the airflow path, and the airflow path extends from the exterior of the wastewater tank 200 into the wastewater tank 200 through the first opening 230. At this time, the second fan 620 provides the power to blow the airflow to the first opening 230.

In some embodiments, the second fan 620 is arranged outside the surface cleaning device, for example, at the maintenance station docked with the surface cleaning device. As shown in Fig. 10, during self-cleaning of the wastewater tank, the second fan 620 is activated, and the airflow enters the first duct 240 of the cleaning device along the second duct 610 in the maintenance station from an airflow inlet in one side of the second fan 620 of the maintenance station, and then reaches the first opening 230. After entering from the first opening 230, the airflow blows to the wastewater in the wastewater tank, so that the wastewater oscillates and flushes the wastewater tank.

Specifically, as shown in Fig. 10 and Fig. 11, in this embodiment, a self-cleaning loop includes an inner cavity of the wastewater tank 200 and the first duct 240 communicated with the inner cavity of the wastewater tank 200, and one end of the first duct 240 is communicated with the first opening 230. The first opening 230 is located at the bottom of the wastewater tank, the other end of the first duct 240 is communicated with the second duct 610 at the side of the maintenance station, and the outlet of the second duct 610 is in sealed communication with the inlet of the first duct 240. The second fan 620 (the suction fan 20 according to the above embodiment) is arranged at a side of the maintenance station close to the inlet of the second duct 610 and is configured such that when the self-cleaning instruction of the wastewater tank is executed, due to rotation of the second fan 620, the airflow enters from the inlet of the second duct 610, and blows to the wastewater in the wastewater tank from bottom to top after being discharged from the first opening 230, the wastewater oscillates under the action of the airflow to generate surges, and the self-cleaning of the wastewater tank is achieved under the oscillation of the wastewater.

In some embodiments, the above self-cleaning loop further includes the valve apparatus 60, and the valve apparatus 60 is arranged at a side of the maintenance station close to the second fan 620. The valve apparatus 60 is configured to be opened when the second fan 620 executes the self-cleaning instruction of the wastewater tank, and to be close upon completion of the self-cleaning instruction of the wastewater tank executed by the second fan 620. The specific structure and opening and closing modes of the valve apparatus 60 refer to some embodiments above, and will not be repeated here.

In some embodiments, the above self-cleaning loop further includes an isolation cavity 10, and the isolation cavity 10 is located at the upper part of the second fan 620. As shown in Fig. 10, the second duct 610 includes a second duct I 12 (corresponding to the air outlet channel according to the preceding embodiments) arranged at a side close to the second fan 620 and approximately extending from the second fan 620 to the top of the isolation cavity 10 in the vertical direction; and a second duct II 11 (corresponding to the wastewater inlet channel according to the preceding embodiments) arranged at a side close to the cleaning device and approximately extending downward from the top of the isolation cavity 10 to a position where butting with the first duct is performed. In some embodiments, the second duct II 11 is of a U-shaped structure to prevent wastewater from flowing back to the wastewater tank. The second duct I 12 and the second duct II 11 are communicated with each other through the isolation cavity, and the specific structure of the isolation cavity is as described in the above embodiments, and will not be repeated here.

An embodiment of the present disclosure provides a self-cleaning method of a wastewater tank, which is implemented by adopting the structure according to the above embodiments, and the detailed structure will not be repeated. The self-cleaning method of the wastewater tank includes: in response to a self-cleaning instruction of the wastewater tank, airflow enters the wastewater tank from a first opening located at the bottom of the wastewater tank, so that the wastewater in the wastewater tank oscillates and surges, and the wastewater tank achieves self-cleaning under the oscillation of the wastewater.

In some embodiments, after responding to the self-cleaning instruction of the wastewater tank, the method includes: a valve apparatus is opened, so that an inner cavity of the wastewater tank is communicated with the outside through the first opening, and the external airflow enters the wastewater tank through the valve apparatus and the first opening.

In some embodiments, the method further includes: the valve apparatus is closed after the self-cleaning task of the wastewater tank is completed, so that the inner cavity of the wastewater tank cannot be communicated with the outside through the first opening. In this way, the fan in a surface cleaning device will not leak air from the first opening through the valve during routine work. This ensures that there is enough negative pressure in a fluid recovery passage at one side of the cleaning device, and avoids the following situation: the reduction of a suction force at the brush head side of a roller brush caused by air leakage negatively affects the efficiency and effect of the routine cleaning or self-cleaning work.

In some embodiments, the step that in response to the self-cleaning instruction of the wastewater tank, the airflow enters the wastewater tank from the first opening of the wastewater tank, so that the wastewater in the wastewater tank oscillates and the wastewater tank achieves self-cleaning under the oscillation of the wastewater includes: in response to the self-cleaning instruction of the wastewater tank, a first fan is activated, so that the airflow enters the wastewater tank from the first opening of the wastewater tank, the wastewater in the wastewater tank oscillates, and the wastewater tank achieves self-cleaning under the oscillation of the wastewater, wherein the first fan is arranged at the cleaning device, and optionally, the first fan is arranged above or on the side of the wastewater tank, so that the negative pressure is formed in the wastewater tank after the suction force is provided to the wastewater tank, which is convenient for the external airflow to flow into the wastewater tank through the first opening.

In some embodiments, the step that in response to the self-cleaning instruction of the wastewater tank, the airflow enters the wastewater tank from the first opening of the wastewater tank, so that the wastewater in the wastewater tank oscillates, and the wastewater tank achieves self-cleaning under the oscillation of the wastewater includes: in response to the self-cleaning instruction of the wastewater tank, the first fan is activated, so that the airflow enters the wastewater tank from the first opening of the wastewater tank, the wastewater in the wastewater tank oscillates, and the wastewater tank achieves self-cleaning under oscillation of the wastewater, wherein the first fan is arranged downstream of the first opening in an airflow path, and the airflow path enters the wastewater tank from the exterior of the wastewater tank through the first opening and then extends outside through the first fan.

In some embodiments, the step that in response to the self-cleaning instruction of the wastewater tank, the airflow enters the wastewater tank from the first opening of the wastewater tank, so that the wastewater in the wastewater tank oscillates, and the wastewater tank achieves self-cleaning under the oscillation of the wastewater includes: in response to the self-cleaning instruction of the wastewater tank, the valve apparatus is opened, so that the airflow enters the wastewater tank from the first opening of the wastewater tank, the wastewater in the wastewater tank oscillates, and the wastewater tank achieves self-cleaning under the oscillation of the wastewater. Specifically, for example, during self-cleaning of the roller brush, the cleaning device opens the valve apparatus, and the airflow enters the wastewater tank from the first opening of the wastewater tank, so that the wastewater in the wastewater tank oscillates, and the wastewater tank achieves self-cleaning under the oscillation of the wastewater, that is, the cleaning device is in a state in which the self-cleaning of the roller brush and the self-cleaning of the wastewater tank are performed simultaneously.

In some embodiments, the step that in response to the self-cleaning instruction of the wastewater tank, the airflow enters the wastewater tank from the first opening of the wastewater tank, so that the wastewater in the wastewater tank oscillates, and the wastewater tank achieves self-cleaning under the oscillation of the wastewater includes: in response to the self-cleaning instruction of the wastewater tank, a second fan is activated, so that the airflow enters the wastewater tank from the first opening of the wastewater tank, the wastewater in the wastewater tank oscillates, and the wastewater tank achieves self-cleaning under the oscillation of the wastewater tank, wherein the second fan is arranged upstream of the first opening in the airflow path, and the airflow path flows into the wastewater tank from the exterior of the wastewater tank through the first opening; and optionally, the second fan may be located at one side of the cleaning device or at one side outside the cleaning device.

In some embodiments, the step that in response to the self-cleaning instruction of the wastewater tank, the airflow enters the wastewater tank from the first opening of the wastewater tank, so that the wastewater in the wastewater tank oscillates, and the wastewater tank achieves self-cleaning under the oscillation of the wastewater includes: in response to the self-cleaning instruction of the wastewater tank, the second fan is activated, so that the airflow enters the wastewater tank from the first opening of the wastewater tank, the wastewater in the wastewater tank oscillates, and the wastewater tank achieves self-cleaning under the oscillation of the wastewater, wherein the second fan is arranged in a maintenance station docked with the cleaning device.

For the surface cleaning device, the cleaning system and the self-cleaning method of the wastewater tank according to the present disclosure, when the cleaning device is located at the maintenance station, in response to the self-cleaning instruction of the wastewater tank, the airflow enters the wastewater tank from the first opening located in the wastewater tank, so that the wastewater in the wastewater tank oscillates, and the wastewater tank achieves self-cleaning under the oscillation of the wastewater.

In the related art, when the maintenance station draws wastewater, water vapor will be discharged out of the maintenance station, which will cause contamination to the environment. Therefore, the present application also provides a maintenance station, which can reasonably guide the liquid in the water vapor, thereby preventing the liquid from being discharged out of the maintenance station and avoiding the contamination to the environment.

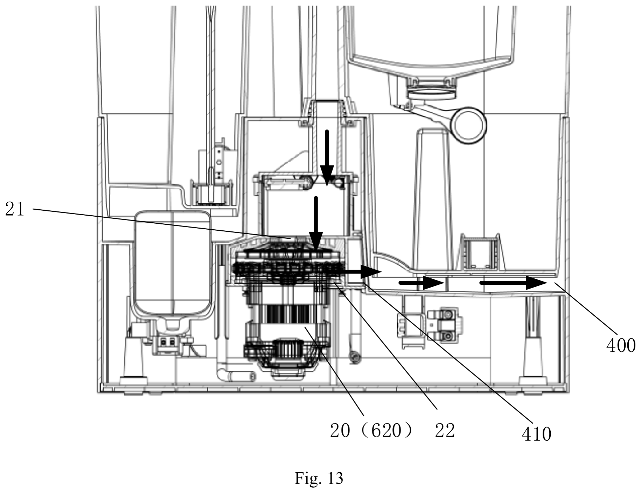

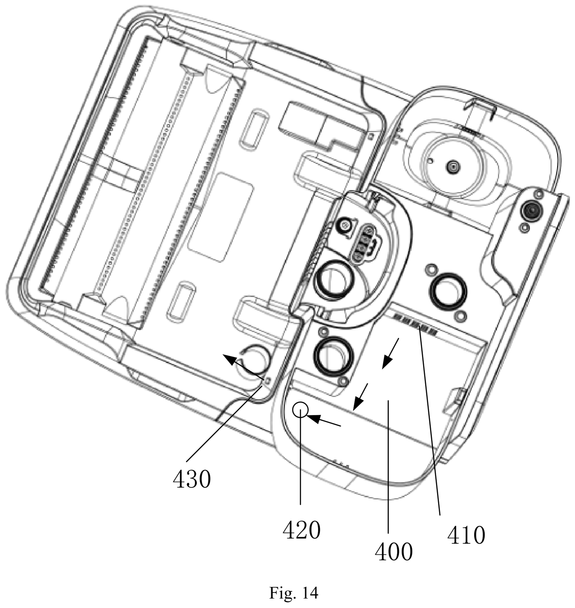

As shown in Fig. 13 to Fig. 17, some embodiments of the present disclosure provide a maintenance station of a cleaning device. The maintenance station includes a suction fan 20 having an air inlet 21 and an air outlet 22. The maintenance station also includes an accommodating cavity 400 for accommodating a recovery tank. The accommodating cavity 400 includes an air vent 410 arranged corresponding to the air outlet 22 of the suction fan 20, and is configured such that the airflow containing the water vapor enters the accommodating cavity 400 from the air vent 410 after being discharged from the air outlet 22. In some embodiments, the bottom of the accommodating cavity 400 is of an inclined structure, the lowest end of the inclined structure, i.e., the bottom, of the accommodating cavity 400 is provided with a water outlet 420, and the water vapor is condensed into the liquid inside the accommodating cavity 400 and then flows out of the accommodating cavity 400 from the water outlet 420. In some embodiments, the maintenance station includes a tray 500 for accommodating the cleaning device. The tray 500 has a tray outlet 430, and the liquid flows in the tray 500 from the tray outlet 430 after flowing out through the water outlet 420. In some embodiments, the tray 500 includes an upper tray layer 510 and a lower tray layer 520. The upper tray layer 510 has a liquid discharging port 511. After reaching the upper tray layer 510, the liquid flows into the lower tray layer 520 from the liquid discharging port 511 of the upper tray layer 510. The liquid discharging port 511 may be a dedicated opening or an opening having other functions, for example, a drying air outlet in the drying process of the tray. The liquid not drawn by the roller brush after flowing into the upper tray layer 510 flows to the lower tray layer 520 through the drying air outlet, i.e., the liquid discharging port 511. In some embodiments, the maintenance station includes a tray float 530 arranged between the upper tray layer 510 and the lower tray layer 520. With the increase of the volume of the liquid flowing into the lower tray layer 520, the tray float 530 floats to form an alarm signal.

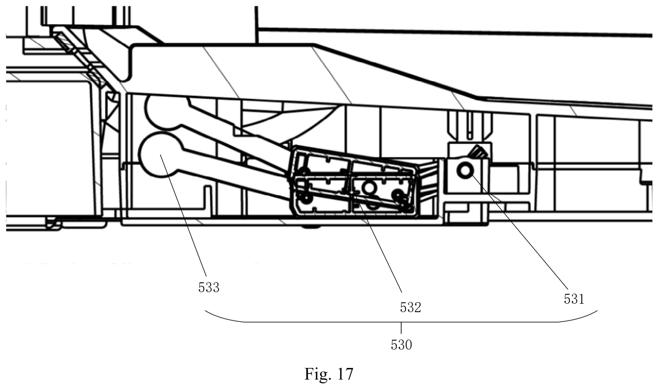

In some embodiments, as shown in Fig. 17, the tray float 530 includes a float connecting end 531, a float body 532 and a float detecting end 533. The float connecting end 531 is fixed to a positioning post of the lower tray layer 520, the float detecting end 533 is a free end, and the float body 532 will float slowly with the increase of the liquid volume of the lower tray layer 520. Since the float body 532 is closer to the float connecting end 531 than the float detecting end 533, after the float body 532 floats for a certain distance, the float detecting end 533 will float for a larger distance, so that the float detecting end 533 is more easily detected by a detection element, that is, the sensitivity of the tray float 530 to a detection signal can be further amplified through this lever structure.

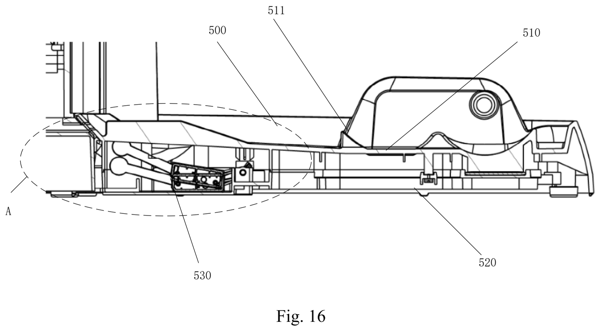

Specifically, as shown in Fig. 13 to Fig. 17, the maintenance station includes the suction fan 20, and the suction fan 20 has the air inlet 21 and the air outlet 22. The maintenance station also includes the accommodating cavity 400 accommodating the recovery tank, the accommodating cavity 400 includes the air vent 410, and the air vent 410 is arranged corresponding to the air outlet 22 of the suction fan 20. The airflow containing water vapor enters through the air inlet 21 of the suction fan 20, is discharged out of the suction fan 20 from the air outlet 22, and then enters the accommodating cavity 400 from the vent hole 410. The bottom of the accommodating cavity 400 is of an inclined structure, and the lowest end of the inclined structure, i.e., the bottom, of the accommodating cavity 400 is provided with the water outlet 420. After condensed into liquid in the accommodating cavity 400, the water vapor flows to the water outlet 420 along the inclined bottom, flows out of the accommodating cavity 400 from the water outlet 420, and flows downward into the tray 500 the tray outlet 430. As shown in Fig. 16, the tray 500 includes an upper tray layer 510 and a lower tray layer 520. After reaching the upper tray layer 510, the liquid flows into the lower tray layer 520 from a liquid discharging port 511 of the upper tray layer 510. The lower tray layer 520 includes a tray float 530. With the increase of the volume of the liquid flowing into the lower tray layer 520, the tray float 530 floats to form an alarm signal, and the user may clear the liquid in the lower tray layer after receiving the alarm signal.

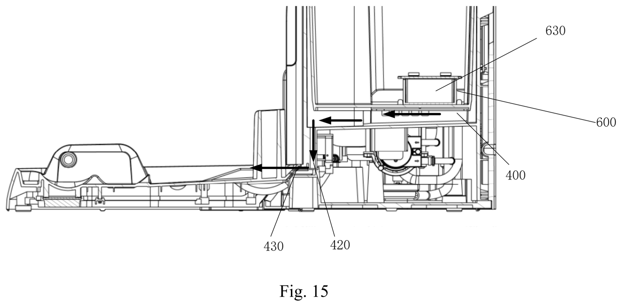

In some embodiments, as shown in Fig. 15, an accommodating groove 600 for placement of a slow-release silver ion cartridge is arranged at the bottom of the recovery tank of the maintenance station, and the accommodating groove has a plurality of locking structures. After the slow-release silver ion cartridge 630 is put into the accommodating groove 600, the slow-release silver ion cartridge 630 is locked by the plurality of locking structures.

Some embodiments of the present disclosure provide a maintenance station of a cleaning device. The maintenance station includes:
an isolation cavity having a wastewater outlet, wherein the isolation cavity is configured to be connected with a wastewater tank of the cleaning device and is operably in fluid communication with the wastewater tank when the cleaning device returns to the maintenance station; and
an isolation valve arranged at the wastewater outlet and configured to be switched between an open state and a closed state, wherein when the isolation valve is in the open state, wastewater in the isolation cavity can be discharged through the wastewater outlet; and when the isolation valve is in the closed state, the wastewater outlet is blocked.

Some embodiments of the present disclosure provide a maintenance station of a cleaning device, and the maintenance station includes:
a charging interface configured to charge the cleaning device;
an isolation cavity having a wastewater outlet, wherein the isolation cavity is configured to be connected with a wastewater tank of the cleaning device and is operably in fluid communication with the wastewater tank when the cleaning device returns to the maintenance station; and
an isolation valve arranged at the wastewater outlet and configured to be switched between an open state and a closed state, wherein when the isolation valve is in the open state, wastewater in the isolation cavity can be discharged through the wastewater outlet; and when the isolation valve is in the closed state, the wastewater outlet is blocked.

In some embodiments, the isolation cavity has a wastewater inlet channel and an air outlet channel, and the wastewater inlet channel is configured to be operably in fluid communication with the wastewater tank of the cleaning device, and
the maintenance station further includes:
a suction fan communicated with the air outlet channel of the isolation cavity.

In some embodiments, when the isolation cavity is connected with the wastewater tank of the cleaning device, the isolation cavity is located at a lower elevation than the wastewater tank, so that the wastewater of the wastewater tank can flow into the isolation cavity under gravity.

In some embodiments, the isolation valve includes:
an isolation valve body configured to block the wastewater outlet; and
a restoring structure configured to make the isolation valve tend to be in the closed state.

In some embodiments, the isolation valve is pivotally connected with an edge of the wastewater outlet through a rotating shaft, the restoring structure includes a counterweight structure, and the counterweight structure and the isolation valve body are arranged on both sides of the rotating shaft respectively, so that the isolation valve tends to be in the closed state.

In some embodiments, the isolation valve is pivotally connected with the edge of the wastewater outlet through the rotating shaft, and the restoring structure includes a spring structure, which is arranged at the rotating shaft, so that the isolation valve tends to be in the closed state.

In some embodiments, a sealing gasket is arranged on the edge of the wastewater outlet, so that foul gas cannot enter the isolation cavity through the wastewater outlet when the isolation valve is in the closed state.

In some embodiments, the maintenance station further includes:
a recovery tank selectively in fluid communication with the isolation cavity through the isolation valve and configured to store the wastewater discharged out of the wastewater outlet.

In some embodiments, the maintenance station further includes:
a wastewater discharge pipe connected with the wastewater outlet, and at least a portion of the isolation valve is arranged in the wastewater discharge pipe.

In some embodiments, an outlet of the wastewater inlet channel and an inlet of the air outlet channel are located at the upper part of the isolation cavity, and the wastewater outlet is located at the bottom of the isolation cavity.

In some embodiments, the outlet of the wastewater inlet channel and the inlet of the air outlet channel are spaced at a predetermined distance.

In some embodiments, the isolation valve is an electric control valve, and the isolation valve receives control signals and is switched between the closed state and the open state.

In some embodiments, after the wastewater in the isolation cavity is completely discharged through the wastewater outlet, the isolation valve receives a closing control signal and is switched from the open state to the closed state.

Some embodiments of the present disclosure also provide a maintenance station of a cleaning device. The maintenance station includes:
a power source configured to provide wastewater discharge power; and
an isolation cavity configured to be operably in fluid communication with a wastewater tank of the cleaning device when the cleaning device returns to the maintenance station, wherein the isolation cavity includes:
   a wastewater outlet configured to discharge wastewater in the isolation cavity;
   an outlet of a wastewater inlet channel operably in fluid communication with the wastewater tank of the cleaning device and configured to allow the wastewater in the wastewater tank of the cleaning device to flow into the isolation cavity; and
   an inlet of an air outlet channel communicated with the power source and configured to form a negative pressure in the isolation cavity under a suction effect of the power source.

In some embodiments, the outlet of the wastewater inlet channel is an outlet formed by upward extension of the wastewater inlet channel along the bottom of the isolation cavity, the inlet of the air outlet channel is an inlet formed by upward extension of the air outlet channel along the bottom of the isolation cavity, and the wastewater inlet channel is approximately parallel to the air outlet channel.

In some embodiments, the outlet of the wastewater inlet channel and the inlet of the air outlet channel are located at the top of the isolation cavity, and the wastewater outlet is located at the bottom of the isolation cavity.

In some embodiments, the wastewater outlet is located at the lowest point in the isolation cavity.

In some embodiments, the outlet of the wastewater inlet channel and the inlet of the air outlet channel are spaced at a predetermined distance.

In some embodiments, the maintenance station further includes an isolation valve, which is arranged at the wastewater outlet and configured to be switched between an open state and a closed state.

In some embodiments, a sealing gasket is arranged on an edge of the wastewater outlet, so that foul gas cannot enter the isolation cavity through the wastewater outlet when the isolation valve is in the closed state.

In some embodiments, when the isolation cavity is connected with a recovery tank of the maintenance station, the isolation cavity is located a lower elevation than the wastewater tank, so that the wastewater of the wastewater tank can flow into the isolation cavity under gravity.

In some embodiments, the maintenance station further includes a recovery tank, which is communicated with the isolation cavity and configured to store the wastewater discharged out of the isolation cavity.

In some embodiments, the maintenance station further includes a wastewater discharge pipe connected with the wastewater outlet, and at least a portion of the isolation valve is arranged in the wastewater discharge pipe.

Some embodiments of the present disclosure also provide a maintenance station of a cleaning device. The maintenance station includes:
a recovery tank configured to store wastewater;
an isolation cavity arranged in the recovery tank and configured to be operably in fluid communication with a wastewater tank of the cleaning device when the cleaning device returns to the maintenance station; and
a float arranged at the bottom of the isolation cavity and configured to detect whether the isolation cavity and/or the recovery tank are in place and/or whether the recovery tank is full of water.

In some embodiments, in response to the float being in a first position, prompt information is generated and indicates at least one of the following situations: the isolation cavity is not in place, the recovery tank is not in place, and the recovery tank is full of water.

In some embodiments, the isolation cavity has a wastewater outlet and a wastewater discharge pipe connected with the wastewater outlet and configured to discharge the wastewater from the wastewater outlet and the wastewater discharge pipe into the recovery tank.

In some embodiments, the isolation cavity further includes an isolation valve arranged at the wastewater outlet and configured to be switched between an open state and a closed state, wherein when the isolation valve is in the open state, the wastewater in the isolation cavity can be discharged through the wastewater outlet, and when the isolation valve is in the closed state, the wastewater outlet is blocked.

In some embodiments, the isolation cavity has a wastewater inlet channel and an air outlet channel, and the wastewater inlet channel is configured to be operably in fluid communication with the wastewater tank of the cleaning device, and
the maintenance station also includes a power source communicated with the air outlet channel of the isolation cavity.

In some embodiments, when the isolation cavity is connected with the recovery tank of the maintenance station, the isolation cavity is located at a lower elevation than the wastewater tank, so that the wastewater of the wastewater tank can flow into the isolation cavity under gravity.

In some embodiments, a sealing gasket is arranged on an edge of the wastewater outlet, so that foul gas cannot enter the isolation cavity through the wastewater outlet when the isolation valve is in the closed state.

In some embodiments, the isolation valve is an electric control valve, and the isolation valve receives control signals and is switched between the closed state and the open state.

In some embodiments, after the wastewater in the isolation cavity is completely discharged through the wastewater outlet, the isolation valve receives a closing control signal and is switched from the open state to the closed state.

Some embodiments of the present disclosure provide a cleaning system including the maintenance station according to the preceding embodiments.

Some embodiments of the present disclosure provide a valve apparatus, which is applied to a fluid passage and includes:
a driving apparatus providing a driving force;
a valve body connected with the driving apparatus and configured to be switched between a first position and a second position under the driving of the driving apparatus, wherein the valve body closes the fluid passage when the valve body is in the first position and opens the fluid passage when the valve body is in the second position; and
a maintenance structure configured to maintain the valve body in the first position or the second position.

In some embodiments, the valve apparatus further includes:
a valve rotating shaft sleeving an output shaft of the driving apparatus and configured to drive the valve body to be switched between the first position and the second position under the rotation of the driving apparatus.

In some embodiments, the maintenance structure includes:
a support member fixed at a higher elevation than the valve body; and
an elastic member, wherein one end of the elastic member is connected with the support member, the other end of the elastic member is connected with the valve body, and the elastic member is configured to apply a pulling force towards the first position or the second position to the valve body along with the rotation of the driving apparatus.

In some embodiments, a side of the valve body facing the fluid passage has an edge protrusion part, and the edge protrusion part is configured to extend into the fluid passage when the valve body closes the fluid passage.

In some embodiments, an edge of the valve body has a sealing gasket configured to seal the fluid passage when the valve body closes the fluid passage.

In some embodiments, the valve apparatus further includes:
a cavity body for accommodating the valve body and configured to provide an accommodating space when the valve body is switched between the first position and the second position.

In some embodiments, the cavity body includes:
a first opening and a second opening which are configured to be communicated with the fluid passage, wherein the valve body closes the first opening or the second opening.

In some embodiments, the driving force provided by the driving apparatus is a reciprocating driving force.

An embodiment of the present disclosure also provides a maintenance station, including the valve apparatus according to any item above.

In some embodiments, the valve apparatus is arranged in the fluid passage for opening or closing the fluid passage.

In some embodiments, the maintenance station further includes:
a suction fan, wherein in response to a deactivation signal of the suction fan, the driving apparatus drives the valve body to be in the first position to close the fluid passage; and/or in response to an activation signal of the suction fan, the driving apparatus drives the valve body to be in the second position to open the fluid passage.

An embodiment of the present disclosure provides a surface cleaning device, including:
a wastewater tank for collecting wastewater recovered from a surface to be cleaned, wherein the wastewater tank includes:
a wastewater inlet configured to allow the wastewater to enter the wastewater tank; and
a first opening configured such that in response to a self-cleaning instruction of the wastewater tank, airflow enters the wastewater tank from the first opening, such that the wastewater in the wastewater tank oscillates and the wastewater tank achieves self-cleaning under the oscillation of the wastewater.

An embodiment of the present disclosure provides a surface cleaning device, including:
a cleaning liquid distribution system configured to distribute a cleaning liquid to a cleaning component or a surface to be cleaned; and
a wastewater tank for collecting wastewater recovered from the surface to be cleaned, wherein the wastewater tank includes:
   a wastewater inlet configured to allow the wastewater to enter the wastewater tank; and
   a first opening configured such that in response to a self-cleaning instruction of the wastewater tank, airflow enters the wastewater tank from the first opening, such that the wastewater in the wastewater tank oscillates, and the wastewater tank achieves self-cleaning under the oscillation of the wastewater.

In some embodiments, the first opening is arranged at the bottom of the wastewater tank.

In some embodiments, the first opening includes a wastewater outlet configured to discharge wastewater in the wastewater tank.

In some embodiments, the surface cleaning device further includes:
a first duct communicated with the first opening and configured such that the airflow enters the wastewater tank through the first duct.

In some embodiments, the first duct is of an inverted U-shaped structure.

In some embodiments, the surface cleaning device further includes:
a pressure relief valve configured to seal a second duct connected with the first duct.

In some embodiments, in response to the self-cleaning instruction of the wastewater tank, a valve apparatus is opened, so that the airflow enters the wastewater tank from the first opening.

In some embodiments, the surface cleaning device further includes:
a first fan configured to provide power, so that the airflow enters the wastewater tank from the first opening.

In some embodiments, the surface cleaning device further includes:
the first fan;
wherein the power of the airflow comes from a second fan.

In some embodiments, the second fan is arranged in an airflow path and located upstream of the first opening, and the airflow path extends from the exterior of the wastewater tank into the wastewater tank through the first opening.

In some embodiments, the second fan is arranged at a maintenance station docked with the cleaning device.

In some embodiments, the first fan is arranged in an airflow path and located downstream of the first opening, and the airflow path enters the wastewater tank from the exterior of the wastewater tank through the first opening and then extends outside through the first fan.

An embodiment of the present disclosure also provides a cleaning system, including the cleaning device according to any item above.

An embodiment of the present disclosure also provides a self-cleaning method of a wastewater tank, which includes:
in response to a self-cleaning instruction of the wastewater tank, airflow enters the wastewater tank from a first opening of the wastewater tank, so that the wastewater in the wastewater tank oscillates, and the wastewater tank achieves self-cleaning under the oscillation of the wastewater.

In some embodiments, after in response to the self-cleaning instruction of the wastewater tank, the method includes:
a valve apparatus is opened, so that an inner cavity of the wastewater tank is communicated with the outside through the first opening.

In some embodiments, the method further includes:
after a self-cleaning task of the wastewater tank is completed, the valve apparatus is closed, so that the inner cavity of the wastewater tank cannot be communicated with the outside through the first opening.

In some embodiments, the step that in response to the self-cleaning instruction of the wastewater tank, the airflow enters the wastewater tank from the first opening of the wastewater tank, so that the wastewater in the wastewater tank oscillates, and the wastewater tank achieves self-cleaning under the oscillation of the wastewater includes:
in response to the self-cleaning instruction of the wastewater tank, a first fan is activated, so that the airflow enters the wastewater tank from the first opening of the wastewater tank, the wastewater in the wastewater tank oscillates, and the wastewater tank achieves self-cleaning under the oscillation of the wastewater, wherein the first fan is arranged in a cleaning device.

In some embodiments, the step that in response to the self-cleaning instruction of the wastewater tank, the airflow enters the wastewater tank from the first opening of the wastewater tank, so that the wastewater in the wastewater tank oscillates and the wastewater tank achieves self-cleaning under the oscillation of the wastewater includes:
in response to the self-cleaning instruction of the wastewater tank, a first fan is activated, so that the airflow enters the wastewater tank from the first opening of the wastewater tank, the wastewater in the wastewater tank oscillates, and the wastewater tank achieves self-cleaning under the oscillation of the wastewater;
wherein the first fan is arranged in an airflow path and located downstream of the first opening, and the airflow path enters the wastewater tank from the exterior of the wastewater tank through the first opening and then extends outside through the first fan.

In some embodiments, the step that in response to the self-cleaning instruction of the wastewater tank, the airflow enters the wastewater tank from the first opening of the wastewater tank, so that the wastewater in the wastewater tank oscillates, and the wastewater tank achieves self-cleaning under the oscillation of the wastewater includes:
in response to the self-cleaning instruction of the wastewater tank, a valve apparatus is opened, so that the airflow enters the wastewater tank from the first opening of the wastewater tank, the wastewater in the wastewater tank oscillates, and the wastewater tank achieves self-cleaning under the oscillation of the wastewater.

In some embodiments, the step that in response to the self-cleaning instruction of the wastewater tank, the airflow enters the wastewater tank from the first opening of the wastewater tank, so that the wastewater in the wastewater tank oscillates, and the wastewater tank achieves self-cleaning under the oscillation of the wastewater includes:
in response to the self-cleaning instruction of the wastewater tank, a second fan is activated, so that the airflow enters the wastewater tank from the first opening of the wastewater tank, the wastewater in the wastewater tank oscillates, and the wastewater tank achieves self-cleaning under the oscillation of the wastewater,
wherein the second fan is arranged in an airflow path and located upstream of the first opening, and the airflow path extends into the wastewater tank from the exterior of the wastewater tank through the first opening.

In some embodiments, the step that in response to the self-cleaning instruction of the wastewater tank, the airflow enters the wastewater tank from the first opening of the wastewater tank, so that the wastewater in the wastewater tank oscillates, and the wastewater tank achieves self-cleaning under the oscillation of the wastewater includes:
in response to the self-cleaning instruction of the wastewater tank, a second fan is activated, so that the airflow enters the wastewater tank from the first opening of the wastewater tank, the wastewater in the wastewater tank oscillates, and the wastewater tank achieves self-cleaning under the oscillation of the wastewater,
wherein the second fan is arranged in a maintenance station docked with the cleaning device.

Finally, it should be noted that various embodiments in the Description are described in a progressive manner, each embodiment focuses on the differences from other embodiments, and the same or similar parts among the various embodiments may refer to one another. For the system or the apparatus disclosed in the embodiments, since the system or the apparatus corresponds to the method disclosed in the embodiment, the description is relatively simple, and the relevant parts may refer to the description of the method section.

The above embodiments are only used to illustrate the technical solutions of the present disclosure and are not intended to limit the present disclosure. Although the present disclosure has been described in detail with reference to the foregoing embodiments, those of ordinary skills in the art should understand that, they can still make modifications to the technical solutions described in the foregoing embodiments or make equivalent substitutions to part of the technical features; and these modifications or substitutions do not make the essence of the corresponding technical solutions deviate from the spirit and scope of the technical solutions of the various embodiments of the present disclosure.

## Claims

1. A maintenance station of a cleaning device, wherein the maintenance station comprises:
an isolation cavity having a wastewater outlet, wherein the isolation cavity is configured to be connected with a wastewater tank of the cleaning device and is operably in fluid communication with the wastewater tank when the cleaning device returns to the maintenance station; and
an isolation valve arranged at the wastewater outlet and configured to be switched between an open state and a closed state, wherein when the isolation valve is in the open state, wastewater in the isolation cavity can be discharged through the wastewater outlet; and when the isolation valve is in the closed state, the wastewater outlet is blocked.

2. The maintenance station according to claim 1, wherein the isolation cavity has a wastewater inlet channel and an air outlet channel, the wastewater inlet channel being configured to be operably in fluid communication with the wastewater tank of the cleaning device, and
the maintenance station further comprises:
a suction fan communicated with the air outlet channel of the isolation cavity.

3. The maintenance station according to claim 1, wherein when the isolation cavity is connected with the wastewater tank of the cleaning device, the isolation cavity is located at a lower elevation than the wastewater tank, so that the wastewater in the wastewater tank can flow into the isolation cavity under gravity.

4. The maintenance station according to any one of claims 1 to 3, wherein the isolation valve comprises:
an isolation valve body configured to block the wastewater outlet; and
a restoring structure configured to make the isolation valve tend to be in the closed state.

5. The maintenance station according to claim 4, wherein the isolation valve is pivotally connected with an edge of the wastewater outlet through a rotating shaft, the restoring structure comprises a counterweight structure, and the counterweight structure and the isolation valve body are arranged on both sides of the rotating shaft respectively, so that the isolation valve tends to be in the closed state.

6. The maintenance station according to claim 4, wherein the isolation valve is pivotally connected with the edge of the wastewater outlet through a rotating shaft, and the restoring structure comprises a spring structure arranged at the rotating shaft, so that the isolation valve tends to be in the closed state.

7. The maintenance station according to any one of claims 1 to 3, wherein a sealing gasket is arranged on the edge of the wastewater outlet, so that foul gas cannot enter the isolation cavity through the wastewater outlet when the isolation valve is in the closed state.

8. The maintenance station according to any one of claims 1 to 3, further comprising:
a recovery tank selectively in fluid communication with the isolation cavity through the isolation valve and configured to store the wastewater discharged through the wastewater outlet.

9. The maintenance station according to any one of claims 1 to 3, further comprising:
a wastewater discharge pipe connected with the wastewater outlet, at least a portion of the isolation valve being arranged in the wastewater discharge pipe.

10. The maintenance station according to claim 2, wherein an outlet of the wastewater inlet channel and an inlet of the air outlet channel are located at an upper part of the isolation cavity, and the wastewater outlet is located at a bottom of the isolation cavity.

11. The maintenance station according to claim 10, wherein the outlet of the wastewater inlet channel and the inlet of the air outlet channel are spaced at a predetermined distance.

12. The maintenance station according to any one of claims 1 to 3, wherein the isolation valve is an electric control valve, and the isolation valve receives control signals and is switched between the closed state and the open state.

13. A cleaning system, comprising the maintenance station according to any one of claims 1 to 12.
